# EUROPÄISCHE PATENTSCHRIFT

(11) **EP 2 853 453 B1**
(45) Veröffentlichungstag und Bekanntmachung des Hinweises auf die Patenterteilung: **13.03.2019**
(21) Anmeldenummer: 14002477.9
(22) Anmeldetag: 17.07.2014
(51) Int. Cl.: B60T 8/17

(54) **Bremssystem und Verfahren zur Kurvenunterstützung**
Braking system and method for curve support
Système de freinage et procédé d'assistance dans les virages

(30) Priorität: 25.09.2013 DE 102013015949
(43) Veröffentlichungstag der Anmeldung: 01.04.2015
(73) Patentinhaber: WABCO GmbH, 30453 Hannover (DE)
(72) Erfinder: Roters, Gerd, 31515 Wunstorf (DE); Wohltmann, Dirk, 30974 Wennigsen (DE)

(56) Entgegenhaltungen:
- WO-A1-2011/029864
- DE-A1- 4 224 887
- DE-C1- 10 029 819
- GB-A- 2 403 027

## Beschreibung

Die vorliegende Erfindung betrifft ein Bremssystem zur Kurvenunterstützung bei einem landwirtschaftlichen Nutzfahrzeug, wobei das Nutzfahrzeug einen Fahrtmodusschalter zum Umschalten zwischen einem Straßen-Modus und einem Offroad-Modus, eine Anzahl von Bremsanlagen, die einer Anzahl von Vorderrädern und Hinterrädern zugeordnet sind, eine elektronische Steuereinheit, welche signalleitend mit der Anzahl von Bremsanlagen verbunden und dazu eingerichtet ist, manuelle und automatisch erzeugte Bremsbefehle an die Bremsanlagen zu übermitteln, einen Antriebsmotor, sowie eine Motorsteuerung aufweist, die signalleitend mit dem Antriebsmotor und mit der elektronischen Steuereinheit verbunden und dazu eingerichtet ist, automatisch erzeugte und manuelle Antriebsbefehle an den Antriebsmotor zu übermitteln.

Bremssysteme der vorgenannten Art kommen vielfach bei Nutzfahrzeugen zum Einsatz. Wirtschaftliche Nutzfahrzeuge, aber auch Lastkraftfahrzeuge mit Offroad-Tauglichkeit werden nicht nur auf befestigen Straßen und Wegen bewegt, sondern häufig auch auf Bodenflächen, die zum Befahren mit Fahrzeugen eigentlich nicht ausgebildet sind. Geringe Bodenhaftung und weiche Untergründe sorgen für teils stark eingeschränkte Manövrierfähigkeit dieser Fahrzeuge im Einsatz. Insbesondere Kurvenfahrten stellen hierbei ein Problem dar. Ein solches Nutzfahrzeug ist beispielsweise aus der WO 2011/029864 A1 bekannt.

Es ist bei landwirtschaftlichen Fahrzeugen bekannt, mehr als ein Bremspedal, nämlich zwei Bremspedale in dem Führerhaus des Fahrzeugs vorzusehen, mittels derer der Fahrer selektiv eine oder beide Seiten des Fahrzeugs einbremsen kann. Durch das Einbremsen nur einer Seite von Rädern, also rechts oder links, wird die Kurvenfahrt erleichtert.

Bremsanlagen, die an Fahrzeugen angeordnet sind, welche auch auf befestigten Straßen bewegt werden, dürfen im Straßenbetrieb aber nicht nur seitenweise Bremswirkung entfalten. Aus Gründen der Verkehrssicherheit muss bei solchen Systemen mechanisch verhindert werden, dass die Bremspedale getrennt voneinander im Straßenbetrieb betätigt werden. Zusammen führt dies zu einem relativ hohen Bedienaufwand für die fahrzeugführenden Personen. Zudem besteht bei solchen Systemen das Risiko, dass bei einem Defekt der Verriegelung oder nach einem Vergessen des Verriegelns bei straßentypischen höheren Geschwindigkeiten schwere Unfälle durch nur seitenweises Bremsen hervorgerufen werden.

Grundsätzlich sind auch zur Unterstützung von Kurvenfahrten sogenannte "cornering support" Systeme mit aktiven Lenkbremsen bekannt, die allerdings einen Bremsdruck für die Innenseiten der Radachsen, also die kurveninneren Räder, vorgeben, den der Benutzer nicht beeinflussen kann. Somit sind solche Systeme ungeeignet für Situationen, in denen der Fahrer beispielsweise während der Kurvenfahrt eigene Bremsbefehle einsteuern möchte.

Der Erfindung lag somit die Aufgabe zugrunde, ein Bremssystem der eingangs bezeichneten Art dahingehend zu verbessern, dass ohne negative Sicherheitseinflüsse das Durchfahren von Kurven im Offroad-Modus für den Fahrer einfacher möglich ist.

Die Erfindung löst die ihr zugrunde liegende Aufgabe bei einem Bremssystem der eingangs bezeichneten Art, indem die elektronische Steuereinheit signalleitend mit einem Kurvenmodusschalter verbunden und dazu eingerichtet ist, einen Kurvenunterstützungsmodus zu aktivieren, welcher umfasst: Bremsen der kurveninneren Räder (mittels Aktivieren der entsprechenden kurveninneren Bremsanlagen), und, falls die Vorderräder des Nutzfahrzeugs motorisch angetrieben sind, Bremsen des kurvenäußeren Vorderrads (mittels Aktivieren der entsprechenden kurvenäußeren Bremsanlage), wenn die elektronische Steuereinheit von dem Fahrtmodusschalter ein repräsentatives Signal empfängt, dass das Nutzfahrzeug im Offroad-Modus betrieben wird, vorzugsweise indem der Fahrtmodusschalter mit der elektronischen Steuereinheit oder einem Getriebe des Nutzfahrzeugs verkabelt ist, beispielsweise mittels einer CAN-Busverbindung, von dem Kurvenmodusschalter ein repräsentatives Signal empfängt, dass der Kurvenunterstützungsmodus angefordert wird, und von der Motorsteuerung ein repräsentatives Signal empfängt, dass einen Antriebsbefehl an den Antriebsmotor übermittelt wird.

Die Erfindung macht sich hierbei die Erkenntnis zunutze, dass ein Durchfahren insbesondere enger Kurvenradien besonders dann einfach möglich ist, wenn das antreibende Drehmoment nicht über die kurveninneren Räder, sondern über die kurvenäußeren Räder, an der Stelle mit dem größten Kurvenradius, auf den Boden gebracht wird. Wenn zudem die inneren Kurvenräder nicht mit gleicher Geschwindigkeit bzw. dem gleichen Drehmoment angetrieben werden, wie die kurvenäußeren Vorderräder, verstärkt sich die Kurventendenz des Fahrzeugs insgesamt. Besonders stark ausgeprägt ist dieser Effekt, wenn das gesamte verfügbare Motordrehmoment über das kurvenäußere Hinterrad aufgebracht wird. Dazu ist es vorteilhaft, bei Allrad-Fahrzeugen auch das kurvenäußere Vorderrad entsprechend einzubremsen. Durch die erfindungsgemäße Lösung wird auch ausgenutzt, dass das Bremssystem mittels der elektronischen Steuereinheit in der Lage ist, grundsätzlich jede Bremsanlage an jedem Rad einzeln anzusteuern, solange die entsprechenden pneumatischen oder hydraulischen Vorkehrungen am Fahrzeug getroffen sind, was heutzutage allerdings allgemein bekannt ist. Somit ist es ohne notwendige Vorkehrungen mechanischer Art ermöglicht, elektronisch unterstützt durch Auswählen eines Kurvenunterstützungsmodus mittels eines korrespondierenden Bedienelements die auf die Kurvenfahrt abgestimmte Bremsweise der kurveninneren, und erforderlichen des vorderen kurvenäußeren Rades zu aktivieren und zu deaktivieren.

Hierbei ist die elektronische Steuereinheit vorzugsweise dazu eingerichtet, im Kurvenunterstützungsmodus die kurveninneren Räder und das kurvenäußere Vorderrad, falls die Vorderräder des Nutzfahrzeugs motorisch angetrieben sind, derart zu bremsen, dass antriebswirksames Drehmoment ausschließlich an das kurvenäußere Hinterrad übertragen wird.

In einer vorteilhaften Weiterbildung der Erfindung weist das Bremssystem eine Anzahl von Geschwindigkeitssensoren auf, welche signalleitend mit der elektronischen Steuereinheit verbunden sind, und die elektronische Steuereinheit ist dazu eingerichtet, den Kurvenunterstützungsmodus nur dann zu aktivieren, wenn die elektronische Steuereinheit ein repräsentatives Signal empfängt, dass die Geschwindigkeit des Nutzfahrzeugs eine vorbestimmte Schwelle nicht überschreitet. Hierdurch kann steuerungstechnisch vermieden werden, dass der Kurvenunterstützungsmodus aus Versehen während der Straßenfahrt bei hoher Geschwindigkeit aktiviert wird. Eine eventuell vom Fahrer getätigte Fehlbedienung und unwillentlich erfolgte Aktivierung oder Anforderung des Kurvenunterstützungsmodus bleibt somit ohne Folgen.

In einer weiteren bevorzugten Ausführungsform weist das Nutzfahrzeug eine Anzahl von Lenkwinkelsensoren auf, welche signalleitend mit der elektronischen Steuereinheit verbunden sind, und die elektronische Steuereinheit ist dazu eingerichtet, den Kurvenunterstützungsmodus nur dann zu aktivieren, wenn die elektronische Steuereinheit ein repräsentatives Signal empfängt, dass der Lenkwinkel eine vorbestimmte Schwelle erreicht. Zur Erfassung eignen sich in diesem Sinne der an der Lenksäule erfasste Lenkwinkel, und/oder ein unmittelbar erfolgter Lenkausschlag der gelenkten Räder. Diese Ausgestaltung ist beispielsweise dann vorteilhaft, wenn sichergestellt werden soll, dass nicht bei nur geringfügigen Richtungsänderungen der Kurvenunterstützungsmodus aktiviert werden kann, vor allem wenn solche Situationen betrachtet werden, in denen der Kurvenunterstützungsmodus noch nicht notwendig ist, und die Nachteile des teilweisen Drehmomentverlusts an den Rädern die Vorteile eines besseren - sprich kleineren - Kurvenradius überwiegen.

Gemäß einer weiteren vorteilhaften Ausführungsform des Bremssystems weist das Nutzfahrzeug eine Bremspedaleinheit zum Einsteuern eines manuellen Bremsbefehls auf, welche signalleitend mit der elektronischen Steuereinheit verbunden ist, und die elektronische Steuereinheit ist dazu eingerichtet, den Kurvenunterstützungsmodus zu deaktivieren, sobald die elektronische Steuereinheit von der Bremspedaleinheit ein repräsentatives Signal empfängt, dass der eingesteuerte Bremsdruck eine vorbestimmte Schwelle erreicht. Diese Schwelle ist vorzugsweise jedenfalls bei Vollbremsung, besonders bevorzugt jedoch bereits bei einer Teilbremsung, zu erreichen. Die vorbestimmte Schwelle wird vorzugsweise definiert über eine Erfassung des Bremsdrucks in einer Bremsdruckleitung mittels entsprechender Sensoren, und/oder über den zurückgelegten Pedalweg des Bremspedals mittels entsprechender Wegaufnehmer am Pedal. Als Minimallösung kommt auch in Betracht, die Auflösung des repräsentativen Signals in Abhängigkeit der Betätigung eines Druckschalters zu realisieren. Beispielsweise käme hierfür ein Bremslichtschalter in Betracht.

Gemäß einer weiteren vorteilhaften Weiterbildung des erfindungsgemäßen Bremssystems ist die elektronische Steuereinheit dazu eingerichtet, den Kurvenunterstützungsmodus zu deaktivieren, sobald die elektronische Steuereinheit, vorzugsweise von der Motorsteuerung, einem Body-Controller oder einer Gateway-Einheit, ein repräsentatives Signal empfängt, das der Antriebsbefehl eine vorbestimmte Schwelle erreicht. Vorzugsweise steuert das Bremssystem im Kurvenunterstützungsmodus bereits bei "Teilgas" ein Bremsdruck für die gebremsten Räder ein, der jegliches angefordertes Drehmoment oberhalb der Schwelle des Antriebsbefehls auffängt. Vorzugsweise weist das Bremssystem zur Bestimmung des Erreichens und Überschreitens der Schwelle des Antriebsbefehls Weg- und/oder Winkelaufnehmer zur Erfassung der Gaspedalstellung auf, oder aber Mittel zum Erfassen einer fahrerbedingten Drehmomentanforderung, des sogenannten Driver Demand Torque. Letzterer kann der elektronischen Steuereinheit beispielsweise mittels einer CAN-Busverbindung übermittelt werden.

Gemäß einem bevorzugten Ausführungsbeispiel der Erfindung weist der Kurvenmodusschalter eine neutrale Schaltstellung auf, in welcher der Kurvenunterstützungsmodus deaktiviert ist, sowie eine erste Schaltstellung und eine zweite Schaltstellung zum Anfordern des Kurvenunterstützungsmodus, wobei in der ersten Schaltstellung die Vorder- und Hinterräder auf einer ersten Seite des Nutzfahrzeugs als kurveninnere Räder zugewiesen werden, und in der zweiten Schaltstellung die Vorder- und Hinterräder auf einer der ersten Seite gegenüberliegenden zweiten Seite des Nutzfahrzeugs als kurveninnere Räder zugewiesen werden. Die erste Schaltstellung kann beispielsweise die Kurvenfahrt in Vorwärtsrichtung nach "links" repräsentieren, während die zweite Schaltstellung die Kurvenfahrt in Vorwärtsrichtung nach "rechts" repräsentiert, oder umgekehrt.

In einer bevorzugten Alternative umfasst der Kurvenmodusschalter einen Aktivierungsschalter, und das Nutzfahrzeug weist eine Anzahl von Lenkwinkelsensoren auf, welche signalleitend mit der elektronischen Steuereinheit verbunden sind. Ferner vorzugsweise ist die elektronische Steuereinheit dann dazu eingerichtet, den Kurvenunterstützungsmodus dann zu aktivieren, wenn die elektronische Steuereinheit ein repräsentatives Signal von dem Aktivierungsschalter empfängt, und in Abhängigkeit eines von den Lenkwinkelsensoren empfangenen, für die Richtung des Lenkeinschlags repräsentativen Signals die hiermit identifizierten kurveninneren Räder und, falls die Vorderräder des Nutzfahrzeugs motorisch angetrieben sind, das kurvenäußere Vorderrad zu bremsen. Die Ausgestaltung des Kurvenmodusschalters mit einem einfachen Aktivierungsschalter ergibt in Verbindung mit der Auswertung der Lenkwinkelsensoren in dem Nutzfahrzeug eine für den Fahrer noch vereinfachte Bedienung. Die elektronische Steuereinheit ist dazu eingerichtet, nach erfolgtem Anfordern des Kurvenunterstützungsmodus durch Betätigen des Aktivierungsschalters selbsttätig aufgrund der Auswertung der Lenkwinkelsensorinformationen zu entscheiden, welche Räder die kurveninneren Räder sind. Hierdurch wird auch das Risiko einer Fehlbedienung seitens des Fahrers weiter vermindert.

Wenn aber der Kurvenmodusschalter für beide Lenkrichtungen eine erste und zweite Schaltstellung aufweisen soll, hat es sich als besonders vorteilhaft herausgestellt, dass das Fahrzeug einen Blinkerhebel aufweist, welcher zugleich als der Kurvenmodusschalter dient. Der Blinkerhebel ist sodann vorzugsweise signalleitend mit der elektronischen Steuereinheit verbunden, wahlweise in die erste oder zweite Schaltstellung bewegbar und manuell sowie vorzugsweise mittels einer Blinkerrückstellung zurück in die neutrale Stellung bewegbar.

In einer weiteren bevorzugten Ausgestaltung des Bremssystems weist das Nutzfahrzeug eine Empfangseinheit für einen Satellitennavigationssystem und eine Datensende- und Empfangseinheit auf, welche jeweils signalleitend mit der elektronischen Steuereinheit verbunden sind. Die die elektronische Steuereinheit ist dazu eingerichtet, von dem Satellitennavigationssystem empfangene Positionsdaten mittels der Sende- und Empfangseinheit an eine Fernleitstelle zu übermitteln, und als Funktion der Positionsdaten von der Fernleitstelle mittels der Datensende- und Empfangseinheit Steuerbefehle zu erhalten, die ausgewählt sind, aus der Liste bestehend aus:
- einem Befehl, den Fahrtmodusschalter in den Straßen-Modus oder den Offroad-Modus zu schalten,
- den Kurvenmodusschalter in die neutrale, erste oder zweite Position zu schalten, oder einen Aktivierungsschalter des Kurvenmodusschalters zu betätigen,
- einem Antriebsbefehl zur Übermittlung mittels der Motorsteuerung an den Antriebsmotor,
- einem Lenkbefehl, um einen vorbestimmten Lenkwinkel an den gelenkten Rädern, vorzugsweise den Vorderrädern, einzustellen, wobei das Nutzfahrzeug Mittel zum automatischen Einstellen eines Lenkeinschlags aufweist,
- einem Befehl, den Kurvenunterstützungsmodus zu aktivieren,
- einem Bremsbefehl zum Bremsen der kurveninneren und des kurvenäußeren Rads, falls die Vorderräder angetrieben sind, derart, dass antriebswirksames Drehmoment ausschließlich an das kurvenäußere Hinterrad übertragen wird, und
- einem Befehl, den Kurvenunterstützungsmodus zu deaktivieren.

Die Erfindung betrifft ferner ein Nutzfahrzeug, insbesondere ein landwirtschaftliches Nutzfahrzeug. Die Erfindung löst die ihr zugrundeliegende Aufgabe bei einem Fahrzeug der vorbezeichneten Art, indem das Fahrzeug einen Fahrtmodusschalter zum Umschalten zwischen einem Straßen-Modus und einem Offroad-Modus, einer Anzahl von Bremsanlagen, die einer Anzahl von Vorderrädern und Hinterrädern zugeordnet sind, einer elektronischen Steuereinheit, welche signalleitend mit der Anzahl von Bremsanlagen verbunden und dazu eingerichtet ist, manuelle und automatisch erzeugte Bremsbefehle an die Bremsanlagen zu übermitteln, einem Antriebsmotor sowie eine Motorsteuerung, die signalleitend mit dem Antriebsmotor und der elektronischen Steuereinheit verbunden und dazu eingerichtet ist, automatisch erzeugte und manuelle Antriebsbefehle an den Antriebsmotor zu übermitteln und ein Bremssystem aufweist, wobei das Bremssystem nach einer der hierin vorstehend beschriebenen bevorzugten Ausführungsformen ausgebildet ist.

Hinsichtlich der Vorteile und Ausprägung der Erfindung wird auf die vorstehenden Ausführungen zum erfindungsgemäßen Bremssystem verwiesen.

Die Erfindung betrifft ferner ein Verfahren zur Kurvenunterstützung bei einem Nutzfahrzeug, insbesondere einem landwirtschaftlichen Nutzfahrzeug, und insbesondere bei einem Nutzfahrzeug der vorstehend beschriebenen Art. Das erfindungsgemäße Verfahren löst die ihm zugrundeliegende Aufgabe mit den Schritten:
- Erfassen, ob ein Kurvenunterstützungsmodus angefordert wird,
- Erfassen, ob das Nutzfahrzeug in einem Straßen-Modus oder einem Offroad-Modus betrieben wird, mittels einer elektronischen Steuereinheit,
- Erfassen, ob bei angefordertem Kurvenunterstützungsmodus ein Antriebsbefehl an einen Antriebsmotor des Nutzfahrzeugs übermittelt wird, und
- Aktivieren eines Kurvenunterstützungsmodus, wenn das Nutzfahrzeug im Offroad-Modus betrieben wird, der Kurvenunterstützungsmodus angefordert wird, und ein Antriebsbefehl an den Antriebsmotor übermittelt wird, wobei im Kurvenunterstützungsmodus die kurveninneren Räder und, falls die Vorderräder des Nutzfahrzeugs motorisch angetrieben sind, das kurvenäußere Vorderrad des Nutzfahrzeugs gebremst werden.

Die Vorteile und vorteilhafte Weiterbildung des Verfahrens ergeben sich aus den Ausführungen zu dem erfindungsgemäßen Bremssystem und dem erfindungsgemäßen Nutzfahrzeug sowie aus den nachstehenden Ausführungen.

Das Verfahren wird vorteilhaft weitergebildet, indem im Kurvenunterstützungsmodus die kurveninneren Räder und, falls die Vorderräder des Nutzfahrzeugs motorisch angetrieben sind, das kurvenäußere Vorderrad derart gebremst werden, dass antriebswirksames Drehmoment ausschließlich an das kurvenäußere Hinterrad übertragen wird.

Ferner umfasst das erfindungsgemäße Verfahren vorzugsweise den Schritt des Erfassens der Geschwindigkeit des Nutzfahrzeugs, wobei der Schritt des Aktivierens des Kurvenunterstützungsmodus nur dann erfolgt, wenn die Geschwindigkeit des Nutzfahrzeugs eine vorbestimmte Schwelle nicht überschreitet.

Gemäß einer weiteren bevorzugten Ausführungsform umfasst das Verfahren den Schritt des Erfassens des Lenkwinkels des Nutzfahrzeugs, wobei der Schritt des Aktivierens des Kurvenunterstützungsmodus nur dann erfolgt, wenn der Lenkwinkel eine vorbestimmte Schwelle erreicht.

Das erfindungsgemäße Verfahren umfasst ferner vorzugsweise die Schritte
- Erfassen eines manuell eingesteuerten Bremsdrucks, und
- Deaktivieren des Kurvenunterstützungsmodus, wenn der eingesteuerte Bremsdruck eine vorbestimmte Schwelle erreicht.

Weiter vorzugsweise umfasst das Verfahren die Schritte:
- quantitatives Erfassen des an den Antriebsmotor übermittelten Antriebsbefehls, und
- Deaktivieren des Kurvenunterstützungsmodus, wenn der Antriebsbefehl eine vorbestimmte Schwelle erreicht.

Vorzugsweise umfasst der Schritt des Erfassens, ob ein Kurvenunterstützungsmodus angefordert wird, die Schritte:
- Erfassen einer Schaltstellung eines Kurvenmodusschalters,
- Zuweisen der Vorder- und Hinterräder auf einer ersten Nutzfahrzeugseite als kurveninnere Räder, wenn eine erste Schaltstellung des Kurvenmodusschalters erfasst wird, oder mittels eines oder mehrerer Lenkwinkelsensoren ein entsprechender Lenkeinschlag erfasst wird,
- Zuweisen der Vorder- und Hinterräder auf einer der ersten Seite gegenüberliegenden zweiten Nutzfahrzeugseite als kurveninnere Räder, wenn eine zweite Schaltstellung erfasst wird, oder mittels eines oder mehrerer Lenkwinkelsensoren ein entsprechender Lenkeinschlag erfasst wird, und
- Deaktivieren des Kurvenunterstützungsmodus, wenn eine neutrale Schaltstellung erfasst wird, oder ein Aktivierungsschalter des Kurvenunterstützungsschalters deaktiviert wird.

Gemäß einem weiteren Aspekt wird das erfindungsgemäße Verfahren vorteilhaft weitergebildet durch einen, mehrere oder sämtliche der Schritte:
Empfangen von Positionsdaten eines Satellitennavigationssystems,
- Übermitteln der Positionsdaten mittels an eine Fernleitstelle, und
- Empfangen von Steuerbefehlen als Funktion der Positionsdaten von der Fernleitstelle, die ausgewählt sind aus der Liste bestehend aus:
- einem Befehl, den Fahrtmodusschalter in den Straßen-Modus oder den Offroad-Modus zu schalten,
- einem Befehl, den Kurvenmodusschalter in die neutrale, erste oder zweite Position zu schalten, oder einen Aktivierungsschalter des Kurvenmodusschalters zu betätigen,
- einem Antriebsbefehl zur Übermittlung mittels der Motorsteuerung an den Antriebsmotor,
- einem Lenkbefehl, um einen vorbestimmten Lenkwinkel an den gelenkten Rädern einzustellen, wobei das Nutzfahrzeug Mittel zum automatischen Einstellen eines Lenkeinschlags aufweist,
- einem Befehl, den Kurvenunterstützungsmodus zu aktivieren,
- einem Bremsbefehl zum Bremsen der kurveninneren und, falls die Vorderräder motorisch angetrieben sind, des kurvenäußeren Rads vorzugsweise derart, dass antriebswirksames Drehmoment nur an das kurvenäußere Hinterrad übertragen wird, und
- einem Befehl, den Kurvenunterstützungsmodus zu deaktivieren.

Es werden im Folgenden mehrere Ausführungsbeispiele der Erfindung detailliert beschrieben. Diese sollen die Ausführungsbeispiele nicht notwendigerweise maßstäblich darstellen. Vielmehr ist die Zeichnung, wo zur Erläuterung dienlich, in schematisierter und/oder leicht verzerrter Form ausgeführt. Im Hinblick auf Ergänzungen der aus den Figuren unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren sowie in den Ansprüchen offenbarten Merkmale der Erfindung können sowohl einzeln als auch in beliebiger Kombination für die Weiterbildung der Erfindung wesentlich ein. Zudem fallen in den Rahmen der Erfindung alle Kombinationen aus zumindest zwei der in der Beschreibung, den Figuren und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Die Erfindung wird im Folgenden unter Bezugnahme auf die beigefügten Figuren anhand eines bevorzugten Ausführungsbeispiels näher erläutert. Hierbei zeigen:
- Figur 1: eine schematische Darstellung eines Nutzfahrzeugs mit Bremssystem gemäß einem ersten Ausführungsbeispiel,
- Figur 2: eine schematische Darstellung eines Fahrzeugs mit Bremssystem gemäß einem zweiten Ausführungsbeispiel, und
- Figur 3: eine schematische Darstellung eines Nutzfahrzeugs mit einem System gemäß einem dritten Ausführungsbeispiel.

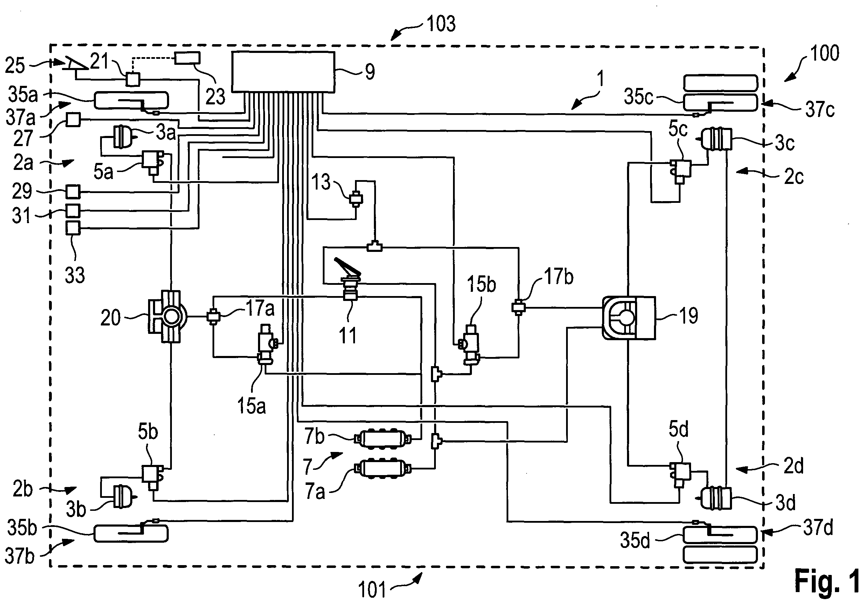

In Figur 1 ist schematisch der Aufbau eines Bremssystems 1 gemäß einem ersten Ausführungsbeispiel der vorliegenden Erfindung dargestellt. Das Bremssystem 1 ist in ein Nutzfahrzeug 100 integriert. Das Bremssystem 1 weist vier Bremsanlagen 2a-d auf, von denen zwei Bremsanlagen 2a, b einer Vorderachse zugeordnet sind, und zwei Bremsanlagen 2c, d, einer Hinterachse zugeordnet sind. An den Bremsanlagen 2a-d wirken jeweils Bremszylinder 3a-d zum Übertragen eines Bremsdrucks auf die Bremsanlagen 2a-d, und somit zum Verzögern des Nutzfahrzeugs 100.

Die Bremsanlagen 2a-d stehen jeweils in fluidleitender Verbindung mit einem ABS-Ventil 5a-d.

Das jeweilige ABS-Ventil 5a-d ist fluidleitend mit einer Druckluftversorgung 7 verbunden. Die Druckluftversorgung 7 umfasst eine Primärluftversorgung 7a und eine Sekundärluftversorgung 7b.

Die ABS-Ventile 5a-d sind signalleitend mit einer elektronischen Steuereinheit 9 verbunden und werden von der elektronischen Steuereinheit 9 zum Erzeugen eines Bremsdrucks auf Seiten der Bremsanlagen 2a-d gesteuert.

Das Nutzfahrzeug 100 weist ferner eine Bremspedaleinheit 11 auf. Die Bremspedaleinheit 11 ist fluidleitend mit der Sekundärluftversorgung 7b der Druckluftversorgung 7 verbunden, um in einem ersten Fluidkreis die Bremsanlagen 2a, b ansteuern zu können.

In einem zweiten Fluidkreis ist die Bremspedaleinheit 11 mit der Primärluftversorgung 7a der Druckluftversorgung 7 verbunden, um die Bremsanlagen 2c, d ansteuern zu können. Von der Druckluftversorgung 7 aus betrachtet stromabwärts von der Bremspedaleinheit 11 ist ein Drucksensor 13 in dem zweiten Fluidkreis angeordnet und dazu eingerichtet, den von der Bremspedaleinheit 11 angesteuerten Druck der Bremsdruckleitung zu erfassen, die in Richtung der Bremsanlagen 2c, d führt.

Der Drucksensor 13 ist signalleitend mit der elektronischen Steuereinheit 9 verbunden. Mittels des Drucksensors 13 werden Bremsbefehle erfasst, die von der Bremspedaleinheit 11 erzeugt werden. Diese Bremsbefehle werden an die elektronische Steuereinheit 9 übermittelt. Stromaufwärts von der Bremspedaleinheit 11 ist in einer Zweigleitung ein Mehrwegeventil 15b angeordnet, welches signalleitend mit der elektronischen Steuereinheit 9 verbunden ist. Mittels des Mehrwegeventils 5b kann ein Bremsdruck in Richtung der Bremsanlagen 2c, d weitergegeben werden, auch wenn die Bremspedaleinheit 11 kein Bremsbefehl erzeugt.

Stromabwärts von dem Mehrwegeventil 15b und dem Drucksensor 13 münden die von den jeweiligen Stellen kommenden Leitungen in ein Select-High-Ventil 17b. Dieses ist dazu eingerichtet, den größeren der ihm zugeführten Drücke in Richtung der Bremsanlagen 2c, d weiterzugeben. Dies bedeutet, dass der Fahrer mittels entsprechender Betätigung der Bremspedaleinheit 11 den von der elektronischen Steuereinheit 9 mittels des Mehrwegeventils 15b eingesteuerten Druck jederzeit manuell übersteuern kann.

Stromabwärts des Select-High-Ventils 17b ist ein Relais-Ventil 19 angeordnet, von welchem aus Zweigleitungen in Richtung der ABS-Ventile 5c, d abgehen.

In ähnlicher Weise vollzieht sich der Leitungsweg in den ersten Fluidkreislauf in Richtung der Bremsanlagen 2a, b; stromabwärts von der Bremspedaleinheit 11 ist ein Select-High-Ventil 17a angeordnet. Eine stromaufwärts von der Bremspedaleinheit 11 von der Leitung zur Sekundärluftversorgung 7b führenden Leitung abzweigende Druckleitung führt mittels eines Mehrwegeventils 15a ebenfalls zu diesem Select-High-Ventil 17a. Das Mehrwegeventil 15a ist wie auch das Mehrwegeventil 15b signalleitend mit der elektronischen Steuereinheit 9 verbunden. Stromabwärts von dem Select-High-Ventil 17a ist ein Quick-Release-Ventil 20 angeordnet und mit dem Select-High-Ventil 17a fluidleitend verbunden, welches die ihm zugeführten Druck an die ABS-Ventile 5a, b weiterleitet.

Zusätzlich zu den schon geschilderten Datenleitungsverbindungen der elektronischen Steuereinheit 9 ist die elektronische Steuereinheit 9 ferner signalleitend mit einer Motorsteuerung 21 verbunden. Die Motorsteuerung 21 ist ihrerseits signalleitend mit einem Antriebsmotor 23 des Nutzfahrzeugs 100 verbunden. Ferner ist dem gezeigten Ausführungsbeispiel die Motorsteuerung 21 mit einer Gaspedaleinheit 25 signalleitend verbunden. Die Motorsteuerung ist vorzugsweise dazu eingerichtet, Antriebsbefehle von der Gaspedaleinheit 25 in Form von repräsentativen Signalen an die elektronische Steuereinheit 9 und/oder den Antriebsmotor 23 zu übermitteln.

Die elektronische Steuereinheit 9 ist ferner signalleitend mit einem Fahrtmodusschalter 27 zum Umschalten zwischen einem Straßen-Modus und einem Offroad-Modus eingerichtet. Ferner ist die elektronische Steuereinheit 9, signalleitend mit einem Kurvenmodusschalter 29 verbunden, welcher dazu eingerichtet ist, ein repräsentatives Signal bezüglich der Anforderung und/oder Aktivierung des Kurvenunterstützungsmodus an die elektronische Steuereinheit 9 zu senden.

Die elektronische Steuereinheit 9 ist ferner signalleitend mit einer Empfangseinheit 31 verbunden, die dazu eingerichtet ist, repräsentative Signale von einer Fernleitstelle zu empfangen, die das Steuern des Nutzfahrzeugs 100 mittels der elektronischen Steuereinheit 9 ermöglichen.

Zudem ist die elektronische Steuereinheit 9 signalleitend mit einer Datensende- und Empfangseinheit 33 verbunden, die alternativ oder zusätzlich zu der Empfangseinheit 31 zum Empfangen von Daten, insbesondere von Steuerbefehlen zum Steuern des Bremssystems 1 und/oder Nutzfahrzeugs 100 eingerichtet ist und vor allem auch dazu eingerichtet ist, repräsentative Daten über Steuerungsvorgänge und Zustandsinformationen des Bremssystems 1 und/oder des Nutzfahrzeugs 100 wie beispielsweise repräsentative Signale der vorstehend genannten ABS-Ventile 5a-d, Mehrwegeventile 15a, b, die elektronische Steuereinheit 9, der Motorsteuerung 21, dem Antriebsmotor 23, der Gaspedaleinheit 25, den Drucksensor 13, den Fahrtmodusschalter 27, und/oder den Kurvenmodusschalter 29 an die Fernleitstelle zu senden. Ferner kann die Datensende- und Empfangseinheit 33 ein GPS-Modul (nicht dargestellt) umfassen, um Positionsdaten des Nutzfahrzeugs 100 an die Fernleitstelle zu melden.

Im vorliegenden Ausführungsbeispiel stellen zwei Räder 35a, b die Vorderräder des Fahrzeugs dar, und die Räder 37c, d die Hinterräder des Fahrzeugs.

Die Vorder- und Hinterräder des Fahrzeugs 37a-d sind mit Geschwindigkeitssensoren 35a-d ausgerüstet, welche wiederum signalleitend mit der elektronischen Steuereinheit 9 verbunden sind.

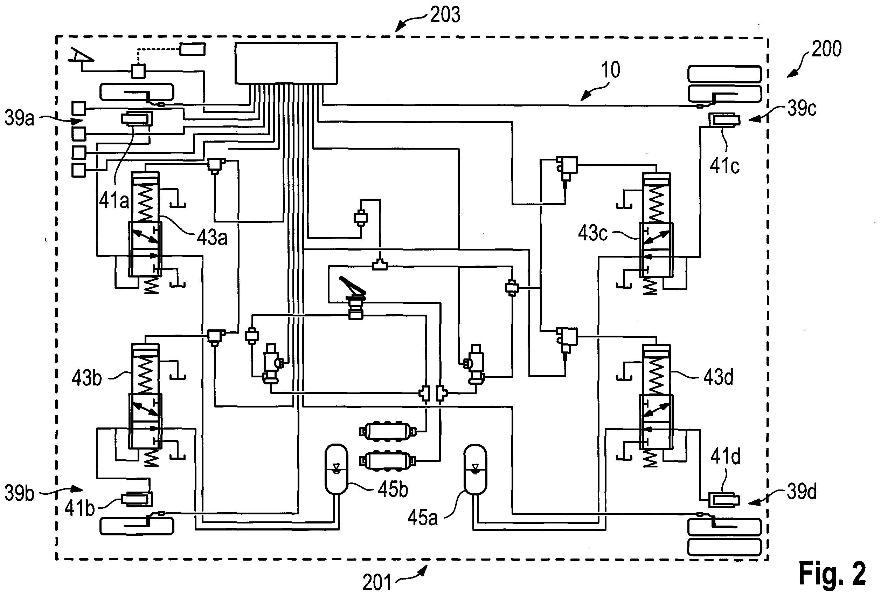

Das schematisch in Figur 2 dargestellte Nutzfahrzeug ist in wesentlichen Teilen strukturell identisch mit dem Nutzfahrzeug 100 gemäß Figur 1. Bezüglich jener Elemente wird auf die Erläuterung zu Figur 1 verwiesen.

Das in Figur 1 gezeigte System der Bremsanlage war ein rein pneumatisches System. Die Erfindung lässt sich aber ebenso gut an Fahrzeugen umsetzen, die ein pneumatisch-hydraulisches Bremssystem aufweisen. Ein solches Schema ist in Figur 2 dargestellt. Das Nutzfahrzeug 200 weist ein Bremssystem 10 auf, welches im Wesentlichen funktional identisch mit dem Bremssystem 1 gemäß Figur 1 ist. Der einzige Unterschied zwischen Bremssystem 10 und Bremssystem 1 liegt darin, dass das Bremssystem 10 zur Ansteuerung der Vorder- und Hinterräder 37a-d jeweils eine pneumatisch-hydraulische Bremsanlage 39a-d aufweist. Diese pneumatisch-hydraulischen Bremsanlagen 39a-d werden mittels hydraulischer Bremszylinder 41a-d betätigt. Zum Ansteuern der hydraulischen Bremszylinder 41a-d ist jeweils ein pneumatisches Steuerventil 43a-d vorgesehen. Zum Versorgen der hydraulischen Bremszylinder 41a-d sind Hydraulik-Druckversorgungen 45a, b vorgesehen, wobei die Hydraulik-Druckversorgung 45a in dem Schaubild gemäß Figur 2 den hinteren pneumatisch-hydraulischen Bremsanlagen 39a, c, d zugeordnet ist, und die Hydraulik-Druckversorgung 75b den vorderen Bremsanlagen 39a, b zugeordnet ist. Die pneumatischen Steuerventile 43a-d werden wiederum durch pneumatisch betätigte ABS-Ventile auch angesteuert und geben wahlweise den Druck von der Hydraulik-Druckversorgung 45a,b an die hydraulischen Bremszylinder 41a-d weiter, oder sind druckentlastet. Die Ansteuerung der ABS-Ventile erfolgt gemäß dem System aus Figur 1.

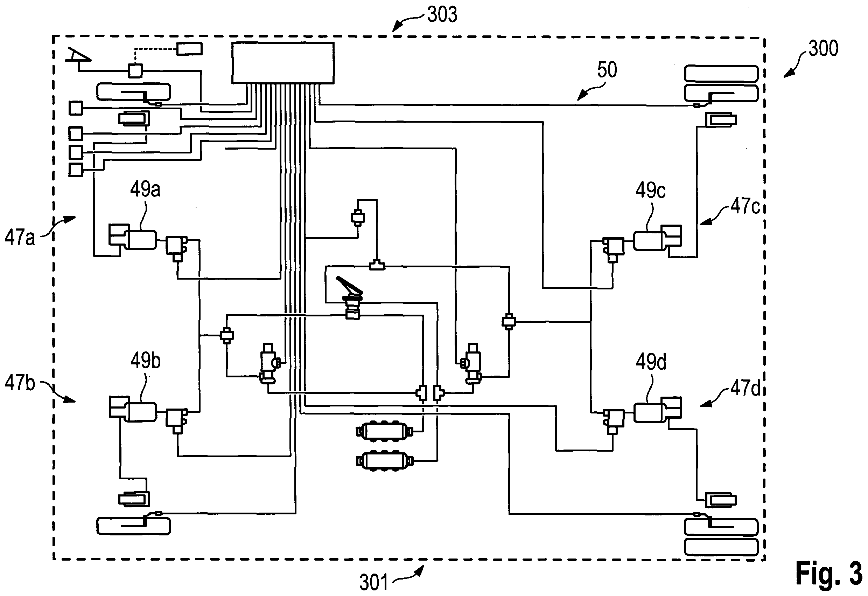

In Figur 3 ist ein Nutzfahrzeug 300 schematisch dargestellt, welches ein Bremssystem 50 umfasst. Das Bremssystem 50 ist im Wesentlichen funktional das gleiche wie das Bremssystem 1, 10 gemäß in Figuren 1 und 2. Im Unterschied zu dem Bremssystemen bzw. Fahrzeugen aus den Figuren 1 und 2 ist allerdings beim Bremsen des Nutzfahrzeugs 300 gemäß Figur 3 eine AoH-Bremsanlage 47a-d den jeweiligen Rädern zugeordnet (Air-over Hydraulic).

Die AoH-Bremsanlagen 47a-d weisen jeweils einen AoH-Übersetzer 49a-d auf. Im Unterschied zu der pneumatisch-hydraulischen Lösung gemäß Figur 2 erfordern die AoH-Übersetzer keinen Anschluss an eine externe Hydraulik-Druckversorgung, sondern weisen jeweils eine integrierte Druckversorgung auf. Abgesehen davon gleicht der systematische Aufbau dem System gemäß den Figuren 1 und 2, was die Funktionsweise des Bremssystems 50 im Vergleich zu den Bremssystemen 1, 10 angeht.

Nachfolgend wird unter Bezugnahme auf die vorstehend beschriebenen Figuren das erfindungsgemäße Verfahren erläutert.

Zunächst wird von einer Situation ausgegangen, in welcher in einem Nutzfahrzeug 100, 200, 300 zum Durchfahren einer Kurve vom Fahrzeug Unterstützung durch den Fahrer gewünscht ist. Zunächst wird, vorzugsweise von der elektronischen Steuereinheit 9, erfasst, ob ein Kurvenunterstützungsmodus angefordert wird. Die Anforderung erfolgt mittels Betätigung des Kurvenmodusschalters 29. Wird der Kurvenunterstützungsmodus angefordert, erfasst die elektronische Steuereinheit des Weiteren, ob das Nutzfahrzeug 100, 200, 300 in einem Straßen-Modus oder einem Offroad-Modus betrieben wird. Dies erfolgt beispielsweise durch Abfragen des Schaltzustandes des Fahrtmodusschalters 27. Wenn das Nutzfahrzeug 100, 200, 300 im Offroad-Modus betrieben wird, kann der Kurvenunterstützungsmodus aktiviert werden. Falls die Aktivierung des Kurvenunterstützungsmodus an weitere Bedingungen geknüpft ist, beispielsweise eine nicht zu überschreitende Fahrgeschwindigkeit, werden zusätzlich Geschwindigkeitsinformationen von der elektronischen Steuereinheit 9 abgefragt, die beispielsweise von den Geschwindigkeitssensoren 35a-d an diese übermittelt werden. Ferner wird von der elektronischen Steuereinheit 9 dann erfasst, ob ein Antriebsbefehl an den Antriebsmotor 23 des Nutzfahrzeugs 100, 200, 300 übermittelt wird. Dies kann erfolgen, indem die Betätigung der Gaspedaleinheit 25 unmittelbar abgefragt wird, oder indem die Motorsteuerung 21, oder der Antriebsmotor direkt mit der elektronischen Steuereinheit kommunizieren.

Wenn die vorgenannten Bedingungen eingetreten sind, wird der Kurvenunterstützungsmodus von der elektronischen Steuereinheit 9 aktiviert. Sodann werden die entweder vom Kurvenmodusschalter 29 als solche vorgegebenen, oder anhand von optional vorgesehenen Lenkwinkelsensoren erkannten inneren Räder 37a,c; 37b,d des Nutzfahrzeugs 100, 200, 300 eingebremst. Falls das Nutzfahrzeug 100, 200, 300 über angetriebene Vorderräder verfügt, wird auch das kurvenäußere Vorderrad entsprechend eingebremst. Als Folge hiervon steht das gesamte verfügbare Drehmoment vorzugsweise ausschließlich am kurvenäußeren Hinterrad zur Verfügung, um die Kurvenfahrt zu unterstützen. Für den Fall, dass das Fahrzeug auch über Lenkwinkelsensoren verfügt, ist es ferner bevorzugt, den Lenkwinkel mittels dieser Sensoren zu erfassen, und den Kurvenunterstützungsmodus nur dann zu aktiveren, wenn der Lenkwinkel eine vorbestimmte Schwelle, beispielsweise im Bereich zwischen dem halben und vollen Lenkeinschlag, erreicht oder überschreitet.

Gemäß einer weiteren Option des Verfahrens erfasst die elektronische Steuereinheit 9 mittels des Bremsdrucksensors 13 einen manuell in die Bremspedaleinheit 11 eingesteuerten Bremsdruck, und deaktiviert den Kurvenunterstützungsmodus, sobald der manuell eingesteuerte Bremsdruck eine vorbestimmte Schwelle erreicht oder überschreitet. Hiermit wird für den Fahrer jederzeit die volle Kontrolle über das Nutzfahrzeug 100, 200, 300 und insbesondere das Bremssystem 1, 10, 50 überlassen. Es kann Fahrsituationen geben, in denen im Anschluss an die Kurvenfahrt oder während der Kurvenfahrt plötzlich das Nutzfahrzeug 100, 200, 300 beschleunigt werden muss. In diesen Fällen ist es zu bevorzugen, wenn die elektronische Steuereinheit 9 den an den Antriebsmotor 23 übermittelten Antriebsbefehl quantitativ erfasst und den Kurvenunterstützungsmodus deaktiviert, wenn der Antriebsbefehl eine vorbestimmte Schwelle erreicht oder überschreitet. In einem solchen Fall steht dann wieder das Drehmoment an allen (angetriebenen) Rädern 37a-d zur Verfügung. In dem bevorzugten Ausführungsbeispiel der Figuren 1 bis 3 ist der Kurvenmodusschalter 29 als Blinkerhebel mit einer neutralen Schaltstellung, einer ersten und einer zweiten Schaltstellung ausgebildet. Vorzugsweise umfasst im Betrieb der Schritt des Erfassens, ob ein Kurvenunterstützungsmodus angefordert wird, den Schritt des Erfassens einer Schaltstellung des Kurvenmodusschalters 29. In Abhängigkeit der Schaltstellung des Kurvenmodusschalters 29 weist die elektronische Steuereinheit 9 den Vorder- und Hinterrädern 37b,d auf einer ersten Nutzfahrzeugseite 101, 201, 301 den Status der kurveninneren Räder zu, wenn die erste Schaltstellung des Kurvenmodusschalters 29 erfasst wird. Alternativ ist dies möglich, indem ein entsprechender Lenkwinkel von den Lenkwinkelsensoren an die elektronische Steuereinheit 9 kommuniziert wird.

In der zweiten Schaltstellung weist die elektronische Steuereinheit den Vorder- und Hinterrädern 37a,c auf einer der ersten Seite 101, 201, 301 gegenüberliegenden zweiten Nutzfahrzeugseite 103, 203, 303 den Status der kurveninneren Räder zu. Alternativ kann dies ebenfalls geschehen, indem die entsprechenden Lenkwinkelsensoren den entsprechenden Lenkwinkel bzw. Lenkeinschlag an die elektronische Steuereinheit 9 kommunizieren.

Der Kurvenunterstützungsmodus wird deaktiviert, wenn der Kurvenmodusschalter 29 in eine neutrale Schaltstellung zurückbewegt wird. Ist gemäß alternativer Ausgestaltung ein einfacher Aktivierungsschalter in Kombination mit den Lenkwinkelsensoren vorgesehen, wird der Kurvenunterstützungsmodus definiert, indem dieser Aktivierungsschalter entweder manuell deaktiviert wird, oder von der elektronischen Steuereinheit 9 dazu veranlasst wird.

Mittels der Empfangseinheit 31 ist es möglich, Positionsdaten eines Satellitennavigationssystems zu empfangen, oder aber auch Steuerbefehle als Funktion der Positionsdaten von einer Fernleitstelle. Mittels der Datensende- und Empfangseinheit 33 können Positionsdaten an eine Fernleitstelle gemeldet werden, und auch Statusinformationen über bestimmte Betriebsparameter des Nutzfahrzeugs 100, 200, 300. Die Steuerbefehle, die an die Fernleitstelle gesendet werden können bestehen aus einem Befehl, den Fahrtmodusschalter 27 in den Straßen-Modus oder den Offroad-Modus zu schalten, den Kurvenmodusschalter 29 in die neutrale, erste oder zweite Position zu schalten, oder einen Aktivierungsschalter des Kurvenmodusschalters 29 zu betätigen, aus einem Antriebsbefehl zur Übermittlung mittels der Motorsteuerung 21 an den Antriebsmotor 23, einem Lenkbefehl, um einen vorbestimmten Lenkwinkel an den gelenkten Rädern einzustellen, wobei das Nutzfahrzeug 100, 200, 300 Mittel zum automatischen Einstellen des Lenkeinschlags aufweist, einem Befehl, den Kurvenunterstützungsmodus zu aktivieren, einen Bremsbefehl zum Bremsen der kurveninneren und gegebenenfalls des kurvenäußeren Rades, vorzugsweise derart, dass wirksames Antriebsmoment nur am kurvenäußeren Hinterrad zur Verfügung steht, und einem Befehl, den Kurvenunterstützungsmodus zu deaktiveren.

### Bezugszeichenliste

- 1, 10, 50: Bremssystem
- 2a-d: Bremsanlage
- 3a-d: Bremszylinder
- 5a-d: ABS-Ventil
- 7: Druckluftversorgung
- 7a: Primärluftversorgung
- 7b: Sekundärluftversorgung
- 9: elektronische Steuereinheit
- 11: Bremspedaleinheit
- 13: Drucksensor
- 15a, b: Mehrwegeventil
- 17a, b: Select-High-Ventil
- 19: Relais-Ventil
- 20: Quick Release -Ventil
- 21: Motorsteuerung
- 23: Antriebsmotor
- 25: Gaspedaleinheit
- 27: Fahrtmodusschalter
- 29: Kurvenmodusschalter
- 31: Empfangseinheit
- 33: Datensende- und Empfangseinheit
- 35a-d: Geschwindigkeitssensoren
- 37a, b: Vorderräder
- 37c, d: Hinterräder
- 39a-d: pneumatisch-hydraulische Bremsanlage
- 41a-d: hydraulische Bremszylinder
- 43a-d: pneumatisches Steuerventil
- 45a, b: Hydraulik-Druckversorgung
- 47a-d: AoH-Bremsanlage (Air over Hydraulic)
- 49a-d: AoH-Übersetzer
- 100, 200, 300: Nutzfahrzeug
- 101, 201, 301: erste Seite des Nutzfahrzeugs
- 103, 203, 303: zweite Seite des Nutzfahrzeugs

## Patentansprüche

1. Bremssystem (1, 10, 50) zur Kurvenunterstützung bei einem landwirtschaftlichen Nutzfahrzeug (100, 200, 300),
wobei das Nutzfahrzeug (100, 200, 300) einen Fahrtmodusschalter (27) zum Umschalten zwischen einem Straßen-Modus und einem Offroad-Modus, eine Anzahl von Bremsanlagen (2a-d; 39a-d; 47a-d), die einer Anzahl von Vorderrädern (37a,b) und Hinterrädern (37c,d) zugeordnet sind, eine elektronische Steuereinheit (9), welche signalleitend mit der Anzahl von Bremsanlagen (2a-d; 39a-d; 47a-d) verbunden und dazu eingerichtet ist, manuelle und automatisch erzeugte Bremsbefehle an die Bremsanlagen (2a-d; 39a-d; 47a-d) zu übermitteln, einen Antriebsmotor (23), sowie eine Motorsteuerung (21) aufweist, die signalleitend mit dem Antriebsmotor (23) und mit der elektronischen Steuereinheit (9) verbunden und dazu eingerichtet ist, automatisch erzeugte und manuelle Antriebsbefehle an den Antriebsmotor (23) zu übermitteln,
**dadurch gekennzeichnet, dass** die elektronische Steuereinheit (9) signalleitend mit einem Kurvenmodusschalter (29) verbunden und dazu eingerichtet ist, einen Kurvenunterstützungsmodus zu aktivieren, welcher umfasst:
- Bremsen der kurveninneren Räder (37b,d) mittels Aktivieren der entsprechenden kurveninneren Bremsanlagen (2b,d; 39b,d; 47b,d), und
- falls die Vorderräder des Nutzfahrzeugs motorisch angetrieben sind, Bremsen des kurvenäußeren Vorderrads (37a) mittels Aktivieren der entsprechenden kurvenäußeren Bremsanlage (2a; 39a; 47a),
wenn die elektronische Steuereinheit (9)
- von dem Fahrtmodusschalter (27) ein repräsentatives Signal empfängt, dass das Nutzfahrzeug (100, 200, 300) im Offroad-Modus betrieben wird,
- von dem Kurvenmodusschalter (29) ein repräsentatives Signal empfängt, dass der Kurvenunterstützungsmodus angefordert wird, und
- von der Motorsteuerung (21) ein repräsentatives Signal empfängt, dass ein Antriebsbefehl an den Antriebsmotor (23) übermittelt wird.

2. Bremssystem (1, 10, 50) nach Anspruch 1,
wobei die Steuereinheit (9) dazu eingerichtet ist, im Kurvenunterstützungsmodus die kurveninneren Räder (37b,d) und , falls die Vorderräder des Nutzfahrzeugs motorisch angetrieben sind das kurvenäußere Vorderrad (37a), derart zu bremsen, dass antriebswirksames Drehmoment ausschließlich an das kurvenäußere Hinterrad übertragen wird.

3. Bremssystem (1, 10, 50) nach Anspruch 1 oder 2,
wobei das Nutzfahrzeug (100, 200, 300) eine Anzahl von Geschwindigkeitssensoren (35) aufweist, welche signalleitend mit der elektronischen Steuereinheit (9) verbunden sind, und die elektronische Steuereinheit (9) dazu eingerichtet ist, den Kurvenunterstützungsmodus nur dann zu aktivieren, wenn die elektronische Steuereinheit (9) ein repräsentatives Signal empfängt, dass die Geschwindigkeit des Nutzfahrzeugs (100, 200, 300) eine vorbestimmte Schwelle nicht überschreitet.

4. Bremssystem (1, 10, 50) nach einem der vorstehenden Ansprüche,
wobei das Nutzfahrzeug (100, 200, 300) eine Anzahl von Lenkwinkelsensoren aufweist, welche signalleitend mit der elektronischen Steuereinheit (9) verbunden sind, und die elektronische Steuereinheit (9) dazu eingerichtet ist, den Kurvenunterstützungsmodus nur dann zu aktivieren, wenn die elektronische Steuereinheit (9) ein repräsentatives Signal empfängt, dass der Lenkwinkel eine vorbestimmte Schwelle erreicht.

5. Bremssystem (1, 10, 50) nach einem der vorstehenden Ansprüche,
wobei das Nutzfahrzeug (100, 200, 300) eine Bremspedaleinheit (11) zum Einsteuern eines manuellen Bremsbefehls aufweist, welche signalleitend mit der elektronischen Steuereinheit (9) verbunden ist, und die elektronische Steuereinheit (9) dazu eingerichtet ist, den Kurvenunterstützungsmodus zu deaktivieren, sobald die elektronische Steuereinheit (9) von der Bremspedaleinheit (11) ein repräsentatives Signal empfängt, dass der eingesteuerte Bremsdruck eine vorbestimmte Schwelle erreicht.

6. Bremssystem (1, 10, 50) nach einem der vorstehenden Ansprüche,
wobei die elektronische Steuereinheit (9) dazu eingerichtet ist, den Kurvenunterstützungsmodus zu deaktivieren, sobald die elektronische Steuereinheit (9), vorzugsweise von der Motorsteuerung (21), einem Body-Controller oder einer Gateway-Einheit, ein repräsentatives Signal empfängt, dass der Antriebsbefehl eine vorbestimmte Schwelle erreicht.

7. Bremssystem (1, 10, 50) nach Anspruch 6,
wobei das Nutzfahrzeug (100, 200, 300) eine Gaspedaleinheit (25) aufweist, welche, vorzugsweise mittels eines Pedalwertgebers, signalleitend mit der Motorsteuerung (21) verbunden ist, und der Antriebsbefehl eine Funktion des Betätigungswinkels des Pedals ist.

8. Bremssystem (1, 10, 50) nach einem der vorstehenden Ansprüche,
wobei der Kurvenmodusschalter (29) eine neutrale Schaltstellung aufweist, in welcher der Kurvenunterstützungsmodus deaktiviert ist, sowie eine erste Schaltstellung und eine zweite Schaltstellung zum Anfordern des Kurvenunterstützungsmodus aufweist, wobei in der ersten Schaltstellung die Vorder- und Hinterräder (37b,d) auf einer ersten Seite (101, 201, 301) des Nutzfahrzeugs (100, 200, 300) als kurveninnere Räder zugewiesen werden, und in der zweiten Schaltstellung die Vorder- und Hinterräder (37a,c) auf einer der ersten Seite gegenüberliegenden zweiten Seite (103, 203, 303) des Nutzfahrzeugs (100, 200, 300) als kurveninnere Räder zugewiesen werden.

9. Bremssystem (1, 10, 50) nach Anspruch 8,
wobei das Fahrzeug (100, 200, 300) einen Blinkerhebel aufweist, welcher zugleich als der Kurvenmodusschalter (29) dient.

10. Bremssystem (1, 10, 50) nach einem der Ansprüche 1 bis 7,
wobei der Kurvenmodusschalter einen Aktivierungsschalter umfasst, und das Nutzfahrzeug (100, 200, 300) eine Anzahl von Lenkwinkelsensoren aufweist, welche signalleitend mit der elektronischen Steuereinheit (9) verbunden sind, und die elektronische Steuereinheit (9) dazu eingerichtet ist, den Kurvenunterstützungsmodus dann zu aktivieren, wenn die elektronische Steuereinheit (9) ein repräsentatives Signal von dem Aktivierungsschalter empfängt, und in Abhängigkeit eines von den Lenkwinkelsensoren empfangenen, für die Richtung des Lenkeinschlags repräsentativen Signals die hiermit identifizierten kurveninneren Räder und, falls die Vorderräder des Nutzfahrzeugs motorisch angetrieben sind, das kurvenäußere Vorderrad zu bremsen.

11. Bremssystem (1, 10, 50) nach einem der vorstehenden Ansprüche,
wobei das Nutzfahrzeug (100, 200, 300) eine Empfangseinheit (31) für ein Satellitennavigationssystem und eine Datensende- und empfangseinheit (33) aufweist, welche jeweils signalleitend mit der elektronischen Steuereinheit (9) verbunden sind, und die elektronische Steuereinheit (9) dazu eingerichtet ist,
- von dem Satellitennavigationssystem empfangene Positionsdaten mittels der Datensende- und empfangseinheit (33) an eine Fernleitstelle zu übermitteln, und
- als Funktion derPositionsdaten von der Fernleitstelle mittels der Datensende- und empfangseinheit (33) Steuerbefehle zu erhalten, die ausgewählt sind aus der Liste bestehend aus:
- einem Befehl, den Fahrtmodusschalter (27) in den Straßen-Modus oder den Offroad-Modus zu schalten,
- einem Befehl, den Kurvenmodusschalter (29) in die neutrale, erste oder zweite Position zu schalten, oder einen Aktivierungsschalter des Kurvenmodusschalters zu betätigen,
- einem Antriebsbefehl zur Übermittlung mittels der Motorsteuerung (21) an den Antriebsmotor (23),
- einem Lenkbefehl, um einen vorbestimmten Lenkwinkel an den gelenkten Rädern, vorzugsweise den Vorderrädern (37a,b), einzustellen, wobei das Nutzfahrzeug (100, 200, 300) Mittel zum automatischen Einstellen eines Lenkeinschlags aufweist,
- einem Befehl, den Kurvenunterstützungsmodus zu aktivieren,
- einem Bremsbefehl zum Bremsen der kurveninneren und des kurvenäußeren Rads derart, dass antriebswirksames Drehmoment ausschließlich an das kurvenäußere Hinterrad übertragen wird, und
- einem Befehl, den Kurvenunterstützungsmodus zu deaktivieren.

12. Landwirtschaftliches Nutzfahrzeug (100, 200, 300)
mit einem Fahrtmodusschalter (27) zum Umschalten zwischen einem Straßen-Modus - und einem Offroad-Modus, einer Anzahl von Bremsanlagen (2a-d; 39a-d; 47a-d), die einer Anzahl von Vorderrädern (37a,b) und Hinterrädern zugeordnet sind, einer elektronischen Steuereinheit (9), welche signalleitend mit der Anzahl von Bremsanlagen (2a-d; 39a-d; 47a-d) verbunden und dazu eingerichtet ist, manuelle und automatisch erzeugte Bremsbefehle an die Bremsanlagen (2a-d; 39a-d; 47a-d) zu übermitteln, einem Antriebsmotor (23), sowie einer Motorsteuerung (21), die signalleitend mit dem Antriebsmotor (23) und mit der elektronischen Steuereinheit (9) verbunden und dazu eingerichtet ist, automatisch erzeugte und manuelle Antriebsbefehle an den Antriebsmotor (23) zu übermitteln, und mit einem Bremssystem (1, 10, 50),
**dadurch gekennzeichnet, dass** das Bremssystem (1, 10, 50) nach einem der vorstehenden Ansprüche ausgebildet ist.

13. Verfahren zur Kurvenunterstützung bei einem landwirtschaftlichen Nutzfahrzeug (100, 200, 300) nach Anspruch 12,
- Erfassen, ob ein Kurvenunterstützungsmodus angefordert wird,
- Erfassen, ob das Nutzfahrzeug (100, 200, 300) in einem Straßen-Modus oder einem Offroad-Modus betrieben wird, mittels einer elektronischen Steuereinheit (9),
- Erfassen, ob bei angefordertem Kurvenunterstützungsmodus ein Antriebsbefehl an einen Antriebsmotor (23) des Nutzfahrzeugs (100, 200, 300) übermittelt wird,
- Aktivieren eines Kurvenunterstützungsmodus, wenn das Nutzfahrzeug (100, 200, 300) im Offroad-Modus betrieben wird, der Kurvenunterstützungsmodus angefordert wird, und ein Antriebsbefehl an den Antriebsmotor (23) übermittelt wird, wobei im Kurvenunterstützungsmodus die kurveninneren Räder und, falls die Vorderräder des Nutzfahrzeugs motorisch angetrieben sind, das kurvenäußere Vorderrad (37a,b) des Nutzfahrzeugs (100, 200, 300) gebremst werden.

14. Verfahren nach Anspruch 13,
wobei im Kurvenunterstützungsmodus die kurveninneren Räder und, falls die Vorderräder des Nutzfahrzeugs motorisch angetrieben sind, das kurvenäußere Vorderrad derart gebremst werden, dass antriebswirksames Drehmoment ausschließlich an das kurvenäußere Hinterrad übertragen wird.

15. Verfahren nach Anspruch 13 oder 14,
umfassend den Schritt des Erfassens der Geschwindigkeit des Nutzfahrzeugs (100, 200, 300), wobei der Schritt des Aktivierens des Kurvenunterstützungsmodus nur dann erfolgt, wenn die Geschwindigkeit des Nutzfahrzeugs (100, 200, 300) eine vorbestimmte Schwelle nicht überschreitet.

16. Verfahren nach einem der Ansprüche 13 bis 15,
umfassend den Schritt des Erfassens des Lenkwinkels des Nutzfahrzeugs (100, 200, 300), wobei der Schritt des Aktivierens des Kurvenunterstützungsmodus nur dann erfolgt, wenn der Lenkwinkel eine vorbestimmte Schwelle erreicht.

17. Verfahren nach einem der Ansprüche 13 bis 16,
umfassend die Schritte:
- Erfassen eines manuell eingesteuerten Bremsdrucks, und
- Deaktivieren des Kurvenunterstützungsmodus, wenn der eingesteuerte Bremsdruck eine vorbestimmte Schwelle erreicht.

18. Verfahren nach einem der Ansprüche 13 bis 17,
umfassend die Schritte:
- quantitatives Erfassen des an den Antriebsmotor (23) übermittelten Antriebsbefehls, und
- Deaktivieren des Kurvenunterstützungsmodus, wenn der Antriebsbefehl eine vorbestimmte Schwelle erreicht.

19. Verfahren nach einem der Ansprüche 13 bis 18,
wobei der Schritt des Erfassens, ob ein Kurvenunterstützungsmodus angefordert wird, einen, mehrere oder sämtliche der Schritte umfasst:
- Erfassen einer Schaltstellung eines Kurvenmodusschalters (29),
- Zuweisen der Vorder- und Hinterräder (37b,d) auf einer ersten Nutzfahrzeugseite (101, 201, 301) als kurveninnere Räder, wenn eine erste Schaltstellung des Kurvenmodusschalters(29) erfasst wird, oder mittels eines oder mehrerer Lenkwinkelsensoren ein entsprechender Lenkeinschlag erfasst wird,
- Zuweisen der Vorder- und Hinterräder (37a,c) auf einer der ersten Seite (101, 201, 301) gegenüberliegenden zweiten Nutzfahrzeugseite (103, 203, 303) als kurveninnere Räder, wenn eine zweite Schaltstellung erfasst wird, oder mittels eines oder mehrerer Lenkwinkelsensoren ein entsprechender Lenkeinschlag erfasst wird, und
- Deaktivieren des Kurvenunterstützungsmodus, wenn eine neutrale Schaltstellung erfasst wird, oder ein Aktivierungsschalter des Kurvenunterstützungsschalters deaktiviert wird.

20. Verfahren nach einem der Ansprüche 13 bis 19,
umfassend einen, mehrere oder sämtliche der Schritte:
- Empfangen von Positionsdaten eines Satellitennavigationssystems,
- Übermitteln der Positionsdaten mittels an eine Fernleitstelle, und
- Empfangen von Steuerbefehlen als Funktion der Positionsdaten von der Fernleitstelle, die ausgewählt sind aus der Liste bestehend aus:
- einem Befehl, den Fahrtmodusschalter (27) in den Straßen-Modus oder den Offroad-Modus zu schalten,
- einem Befehl, den Kurvenmodusschalter (29) in die neutrale, erste oder zweite Position zu schalten, oder einen Aktivierungsschalter des Kurvenmodusschalters zu betätigen,
- einem Antriebsbefehl zur Übermittlung mittels der Motorsteuerung (21) an den Antriebsmotor (23),
- einem Lenkbefehl, um einen vorbestimmten Lenkwinkel an den gelenkten Rädern einzustellen, wobei das Nutzfahrzeug (100, 200, 300) Mittel zum automatischen Einstellen eines Lenkeinschlags aufweist,
- einem Befehl, den Kurvenunterstützungsmodus zu aktivieren,
- einem Bremsbefehl zum Bremsen der kurveninneren und des kurvenäußeren Rads derart, dass antriebswirksames Drehmoment ausschließlich an das kurvenäußere Hinterrad übertragen wird.

## Claims

1. Brake system (1, 10, 50) for cornering assistance in an agricultural utility vehicle (100, 200, 300), wherein the utility vehicle (100, 200, 300) has a travel mode switch (27) for switching over between a road mode and an off-road mode, a number of brake systems (2a-d; 39a-d, 47a-d) which are assigned to a number of front wheels (37a,b) and rear wheels (37c,d), an electronic control unit (9) which is connected in a signal-conducting fashion to the number of brake systems (2a-d; 39a-d; 47a-d) and is configured to transmit manually and automatically generated braking instructions to the brake systems (2a-d; 39a-d; 47a-d), a drive engine (23) and an engine controller (21) which is connected in a signal-conducting fashion to the drive engine (23) and to the electronic control unit (9) and is configured to transmit automatically generated and manual drive instructions to the drive engine (23),
**characterized in that** the electronic control unit (9) is connected in a signal-conducting fashion to a cornering mode switch (29) and is configured to activate a cornering assistance mode which comprises:
- braking of the wheels (37b,d) on the inside of the bend by means of activation of the corresponding brake systems (2b,d; 39b,d; 47b,d) on the inside of the bend, and
- if the front wheels of the utility vehicle are engine-driven, braking of the front wheel (37a) on the outside of the bend by means of activation of the corresponding brake system (2a; 39a; 47a) on the outside of the bend,
if the electronic control unit (9)
- receives from the travel mode switch (27) a representative signal indicating that the utility vehicle (100, 200, 300) is being operated in the off-road mode,
- receives from the cornering mode switch (29) a representative signal indicating that the cornering assistance mode is being requested, and
- receives from the engine controller (21) a representative signal indicating that a drive instruction is being transmitted to the drive engine (23) .

2. Brake system (1, 10, 50) according to Claim 1,
wherein the control unit (9) is configured, in the cornering assistance mode, to brake the wheels (37b,d) on the inside of the bend and, if the front wheels of the utility vehicle are engine-driven, to brake the front wheel (37a) on the outside of the bend in such a way that torque which is effective in terms of drive is transmitted exclusively to the rear wheel on the outside of the bend.

3. Brake system (1, 10, 50) according to Claim 1 or 2,
wherein the utility vehicle (100, 200, 300) has a number of speed sensors (35) which are connected in a signal-conducting fashion to the electronic control unit (9), and the electronic control unit (9) is configured to activate the cornering assistance mode only when the electronic control unit (9) receives a representative signal indicating that the speed of the utility vehicle (100, 200, 300) does not exceed a predetermined threshold.

4. Brake system (1, 10, 50) according to one of the preceding claims,
wherein the utility vehicle (100, 200, 300) has a number of steering angle sensors which are connected in a signal-conducting fashion to the electronic control unit (9), and the electronic control unit (9) is configured to activate the cornering assistance mode only when the electronic control unit (9) receives a representative signal indicating that the steering angle reaches a predetermined threshold.

5. Brake system (1, 10, 50) according to one of the preceding claims,
wherein the utility vehicle (100, 200, 300) has a brake pedal unit (11) for applying a manual braking instruction which unit is connected in a signal-conducting fashion to the electronic control unit (9), and the electronic control unit (9) is configured to deactivate the cornering assistance mode as soon as the electronic control unit (9) receives from the brake pedal unit (11) a representative signal indicating that the applied brake pressure reaches a predetermined threshold.

6. Brake system (1, 10, 50) according to one of the preceding claims,
wherein the electronic control unit (9) is configured to deactivate the cornering assistance mode as soon as the electronic control unit (9) receives, preferably from the engine controller (21), a body controller or a gateway unit, a representative signal indicating that the drive instruction reaches a predetermined threshold.

7. Brake system (1, 10, 50) according to Claim 6,
wherein the utility vehicle (100, 200, 300) has an accelerator pedal unit (25) which is connected in a signal-conducting fashion to the engine controller (21), preferably by means of a pedal value encoder, and the drive instruction is a function of the activation angle of the pedal.

8. Brake system (1, 10, 50) according to one of the preceding claims,
wherein the cornering mode switch (29) has a neutral switched position in which the cornering assistance mode is deactivated, and a first switched position and a second switched position for requesting the cornering assistance mode, wherein in the first switched position the front and rear wheels (37b,d) on a first side (101, 201, 301) of the utility vehicle (100, 200, 300) are assigned as wheels on the inside of the bend, and in the second switched position the front and rear wheels (37a,c) on a second side (103, 203, 303), lying opposite the first side, of the utility vehicle (100, 200, 300) are assigned as wheels on the inside of the bend.

9. Brake system (1, 10, 50) according to Claim 8, wherein the vehicle (100, 200, 300) has a flashing indicator light lever which serves at the same time as the cornering mode switch (29).

10. Brake system (1, 10, 50) according to one of Claims 1 to 7,
wherein the cornering mode switch comprises an activation switch, and the utility vehicle (100, 200, 300) has a number of steering angle sensors which are connected in a signal-conducting fashion to the electronic control unit (9), and the electronic control unit (9) is configured to activate the cornering assistance mode when the electronic control unit (9) receives a representative signal from the activation switch, and to brake, as a function of a signal which is received by the steering angle sensors and is representative of the direction of the steering lock, the wheels on the inside of the bend which are identified with said signal, and to brake the front wheel on the outside of the bend if the front wheels of the utility vehicle are engine-driven.

11. Brake system (1, 10, 50) according to one of the preceding claims,
wherein the utility vehicle (100, 200, 300) has a receiver unit (31) for a satellite navigation system, and a data transceiver unit (33) which are each connected in a signal-conducting fashion to the electronic control unit (9), and the electronic control unit (9) is configured
- to transmit position data received by the satellite navigation system to a remote control centre by means of the data transceiver unit (33), and
- to receive, from the remote control centre by means of the data transceiver unit (33) and as a function of the position data, control instructions which are selected from the list comprising:
- an instruction to switch the travel mode switch (27) into the road mode or the off-road mode,
- an instruction to switch the cornering mode switch (29) into the neutral, first or second position, or to activate an activation switch of the cornering mode switch,
- a drive instruction for transmission to the drive engine (23) by means of the engine controller (21),
- a steering instruction to set a predetermined steering angle at the steered wheels, preferably the front wheels (37a,b), wherein the utility vehicle (100, 200, 300) has means for automatically setting a steering lock,
- an instruction to activate the cornering assistance mode,
- a braking instruction to brake the wheel on the inside of the bend and the wheel on the outside of the bend in such a way that torque which is effective in terms of drive is transmitted exclusively to the rear wheel on the outside of the bend, and
- an instruction to deactivate the cornering assistance mode.

12. Agricultural utility vehicle (100, 200, 300) having a travel mode switch (27) for switching over between a road mode and an off-road mode, a number of braking systems (2a-d; 39a-d; 47a-d) which are assigned to a number of front wheels (37a,b) and rear wheels, an electronic control unit (9) which is connected in a signal-conducting fashion to the number of brake systems (2a-d; 39a-d; 47a-d) and is configured to transmit manual and automatically generated braking instructions to the brake systems (2a-d; 39a-d; 47a-d), a drive engine (23), and an engine controller (21) which is connected in a signal-conducting fashion to the drive engine (23) and to the electronic control unit (9) and is configured to transmit automatically generated and manual drive instructions to the drive engine (23), and having a brake system (1, 10, 50), **characterized in that** the brake system (1, 10, 50) is embodied according to one of the preceding claims.

13. Method for cornering assistance in an agricultural utility vehicle (100, 200, 300) according to Claim 12, comprising the steps:
- sensing whether a cornering assistance mode is requested,
- sensing whether the utility vehicle (100, 200, 300) is being operated in a road mode or an off-road mode, by means of an electronic control unit (9),
- sensing whether, when the cornering assistance mode is requested, a drive instruction is transmitted to a drive engine (23) of the utility vehicle (100, 200, 300),
- activating a cornering assistance mode if the utility vehicle (100, 200, 300) is being operated in the off-road mode, the cornering assistance mode is requested and a drive instruction is transmitted to the drive engine (23),
wherein in the cornering assistance mode the wheels on the inside of the bend are braked and, if the front wheels of the utility vehicle are engine-driven, the front wheel (37a,b) of the utility vehicle (100, 200, 300) on the outside of the bend is braked.

14. Method according to Claim 13,
wherein in the cornering assistance mode the wheels on the inside of the bend are braked, and if the front wheels of the utility vehicle are engine-driven, the front wheel on the outside of the bend is braked, in such a way that torque which is effective in terms of drive is transmitted exclusively to the rear wheel on the outside of the bend.

15. Method according to Claim 13 or 14,
comprising the step of sensing the speed of the utility vehicle (100, 200, 300), wherein the step of activating the cornering assistance mode takes place only when the speed of the utility vehicle (100, 200, 300) does not exceed a predetermined threshold.

16. Method according to one of Claims 13 to 15, comprising the step of sensing the steering angle of the utility vehicle (100, 200, 300), wherein the step of activating the cornering assistance mode takes place only when the steering angle reaches a predetermined threshold.

17. Method according to one of Claims 13 to 16, comprising the steps:
- sensing a manually applied brake pressure, and
- deactivating the cornering assistance mode if the applied brake pressure reaches a predetermined threshold.

18. Method according to one of Claims 13 to 17, comprising the steps:
- quantitative sensing of the drive instruction which is transmitted to the drive engine (23), and
- deactivating the cornering assistance mode if the drive instruction reaches a predetermined threshold.

19. Method according to one of Claims 13 to 18, wherein the step of sensing whether a cornering assistance mode is requested comprises one or more or all of the steps:
- sensing a switched position of a cornering mode switch (29),
- assigning the front and rear wheels (37b,d) on a first utility vehicle side (101, 201, 301) as wheels on the inside of the bend if a first switched position of the cornering mode switch (29) is sensed, or a corresponding steering lock is sensed by means of one or more steering angle sensors,
- assigning the front and rear wheels (37a,c) on a second utility vehicle side (103, 203, 303), lying opposite the first side (101, 201, 301), as wheels on the inside of the bend if a second switched position is sensed, or a corresponding steering lock is sensed by means of one or more steering angle sensors,
and
- deactivating the cornering assistance mode if a neutral switched position is sensed or an activation switch of the cornering assistance switch is deactivated.

20. Method according to one of Claims 13 to 19, comprising one, more or all of the steps:
- receiving position data of a satellite navigation system,
- transmitting the position data by means of to a remote control centre, and
- receiving control instructions from the remote control centre as a function of the position data, which control instructions are selected from the list comprising:
- an instruction to switch the travel mode switch (27) into the road mode or the off-road mode,
- an instruction to switch the cornering mode switch (29) into the neutral, first or second position, or to activate an activation switch of the cornering mode switch,
- a drive instruction for transmission to the drive engine (23) by means of the engine controller (21),
- a steering instruction to set a predetermined steering angle at the steered wheels, wherein the utility vehicle (100, 200, 300) has means for automatically setting a steering lock,
- an instruction to activate the cornering assistance mode, and
- a braking instruction to brake the wheel on the inside of the bend and the wheel on the outside of the bend in such a way that torque which is effective in terms of drive is transmitted exclusively to the rear wheel on the outside of the bend.

## Revendications

1. Système de freinage (1, 10, 50) pour l'assistance au virage dans un véhicule utilitaire agricole (100, 200, 300),
dans lequel le véhicule utilitaire (100, 200, 300) comprend un sélecteur de mode de conduite (27) destiné à basculer entre un mode route et un mode hors route, une pluralité de dispositifs de freinage (2a-d ; 39ad ; 47a-d) qui sont associés à une pluralité de roues avant (37a, b) et de roues arrière (37c, d), une unité de commande électronique (9) qui est reliée de manière conductrice de signaux à la pluralité de systèmes de freinage (2a-d ; 39a-d ; 47a-d) et est conçue pour transmettre des ordres de freinage manuels et générés automatiquement aux systèmes de freinage (2a-d ; 39ad ; 47a-d), un moteur d'entraînement (23) et un système de commande de moteur (21) qui est relié de manière conductrice de signaux au moteur d'entraînement (23) et à l'unité de commande électronique (9) et qui est conçu pour transmettre au moteur d'entraînement (23) des ordres d'entraînement générés automatiquement et manuels,
**caractérisé en ce que** l'unité de commande électronique (9) est reliée de manière conductrice de signaux à un sélecteur de mode de virage (29) et est conçue pour activer un mode d'assistance au virage, et comprend :
- le freinage des roues intérieures au virage (37b,d) par activation des systèmes de freinage intérieurs au virage correspondants (2b,d ; 39b,d ; 47b,d),
- et, dans le cas où les roues avant du véhicule utilitaire sont entraînées par moteur, le freinage de la roue avant extérieure au virage (37a) par activation du système de freinage extérieur au virage correspondant (2a ; 39a ; 47a),
lorsque l'unité de commande électronique (9)
- reçoit en provenance du sélecteur de mode de conduite (27) un signal représentatif du fait que le véhicule utilitaire (100 200 300) est utilisé hors route,
- reçoit en provenance du sélecteur de mode de virage (29) un signal représentatif du fait que le mode d'assistance au virage est nécessaire, et
- reçoit du système de commande de moteur (21) un signal représentatif du fait qu'un ordre d'entraînement est transmis au moteur d'entraînement (23).

2. Système de freinage (1, 10, 50) selon la revendication 1,
dans lequel l'unité de commande (9) est conçue, dans le mode d'assistance au virage, pour freiner les roues intérieures au virage (37b, d) et, lorsque les roues avant du véhicule utilitaire sont entraînées par moteur, pour freiner la roue avant extérieure au virage (37a) de manière à ce que le couple effectif pour l'entraînement soit transmis exclusivement à la roue arrière extérieure au virage.

3. Système de freinage (1, 10, 50) selon la revendication 1 ou 2,
dans lequel le véhicule utilitaire (100, 200, 300) comporte plusieurs capteurs de vitesse (35) qui sont reliés de manière conductrice du signaux à l'unité de commande électronique (9), et l'unité de commande électronique (9) est conçue pour n'activer le mode d'assistance au virage que lorsque l'unité de commande électronique (9) reçoit un signal représentatif du fait que la vitesse du véhicule utilitaire (100, 200, 300) ne dépasse pas un seuil prédéterminé.

4. Système de freinage (1, 10, 50) selon l'une des revendications précédentes,
dans lequel le véhicule utilitaire (100, 200, 300) comprend une pluralité de capteurs d'angle de braquage qui sont reliés de manière conductrice de signaux à l'unité électronique de commande (9), et l'unité électronique de commande (9) est conçue pour n'activer le mode d'assistance au virage que lorsque l'unité de commande électronique (9) reçoit un signal représentatif du fait que l'angle de braquage atteint un seuil prédéterminé.

5. Système de freinage (1, 10, 50) selon l'une des revendications précédentes,
dans lequel le véhicule utilitaire (100, 200, 300) comprend une unité de pédale de frein (11) destinée à appliquer un ordre de freinage manuel, qui est reliée de manière conductrice de signaux à l'unité de commande électronique (9), et l'unité de commande électronique (9) est conçue pour désactiver le mode d'assistance au virage dès que l'unité de commande électronique (9) reçoit en provenance de l'unité de pédale de frein (11) un signal représentatif du fait que la pression de freinage ordonnée atteint un seuil prédéterminé.

6. Système de freinage (1, 10, 50) selon l'une des revendications précédentes,
dans lequel l'unité de commande électronique (9) est conçue pour désactiver le mode d'assistance au virage dès que l'unité de commande électronique (9) reçoit, de préférence en provenance du système de commande de moteur (21), d'un système de commande corporel ou d'une unité passerelle, un signal représentatif du fait que l'ordre d'entraînement atteint un seuil prédéterminé.

7. Système de freinage (1, 10, 50) selon la revendication 6,
dans lequel le véhicule utilitaire (100, 200, 300) comporte une unité de pédale d'accélérateur (25) qui est reliée de manière conductrice de signaux, de préférence au moyen d'un émetteur de valeur de pédale, au système de commande de moteur (21), et l'ordre d'entraînement est une fonction de l'angle d'actionnement de la pédale.

8. Système de freinage (1, 10, 50) selon l'une des revendications précédentes,
dans lequel le sélecteur de mode de virage (29) présente une position de sélection neutre à laquelle le mode d'assistance au virage est désactivé, et une première position de sélection et une seconde position de sélection destinée à demander le mode d'assistance au virage, dans lequel, à la première position de sélection, les roues avant et arrière (37b,d) sont affectées à un premier côté (101, 201, 301) du véhicule utilitaire (100, 200, 300) en tant que roues intérieures au virage, et à la seconde position de sélection, les roues avant et arrière (37a,c) sont affectées à un second côté (103, 203, 303) du véhicule utilitaire (100, 200, 300) en tant que roues intérieures au virage.

9. Système de freinage (1, 10, 50) selon la revendication 8,
dans lequel le véhicule (100, 200, 300) comporte un levier de clignotant qui sert également de sélecteur de mode de virage (29).

10. Système de freinage (1, 10, 50) selon l'une des revendications 1 à 7,
dans lequel le sélecteur de mode de virage comprend un sélecteur d'activation, et le véhicule utilitaire (100, 200, 300) comporte une pluralité de capteurs de braquage qui sont reliés de manière conductrice de signaux à l'unité de commande électronique (9), et l'unité de commande électronique (9) est conçue pour n'activer le mode d'assistance au virage que lorsque l'unité de commande électronique (9) reçoit un signal représentatif en provenance du sélecteur d'activation et, en réponse à un signal d'angle de braquage reçu en provenance des capteurs d'angle de braquage et qui est représentatif de la direction de braquage, pour freiner les roues intérieures au virage ainsi identifiées et, dans le cas où les roues avant du véhicule utilitaire sont entraînées par moteur, pour freiner la roue avant extérieure au virage.

11. Système de freinage (1, 10, 50) selon l'une des revendications précédentes,
dans lequel le véhicule utilitaire (100, 200, 300) comporte une unité de réception (31) destinée à un système de navigation par satellite, et une unité de transmission et de réception de données (33), qui sont chacune reliées de manière conductrice de signaux à l'unité de commande électronique (9), et l'unité de commande électronique (9) est conçue
- pour transmettre des données de position reçues en provenance du système de navigation par satellite à une station de commande à distance au moyen de l'unité de transmission et de réception de données (33), et
- en fonction des données de position, pour obtenir en provenance de la station de commande à distance, au moyen de l'unité de transmission et de réception de données (33), des ordres de commande sélectionnés dans la liste comprenant :
- un ordre pour faire basculer le sélecteur de mode de conduite (27) dans le mode route ou dans le mode hors route,
- un ordre pour faire basculer le sélecteur de mode de virage (29) sur la position neutre, ou la première ou la seconde position, ou pour actionner un sélecteur d'activation du sélecteur de mode de virage,
- un ordre d'entraînement devant être transmis au moteur d'entraînement (23) au moyen du système de commande de moteur (21),
- un ordre de braquage pour régler un angle de braquage prédéterminé sur les roues directrices, de préférence les roues avant (37a,b), dans lequel le véhicule utilitaire (100, 200, 300) comporte des moyens destinés à régler automatiquement un angle de braquage,
- un ordre destiné à activer le mode d'assistance au virage,
- un ordre de freinage destiné à freiner les roues intérieure au virage et extérieure au virage de manière à ce que le couple effectif pour l'entraînement soit transmis exclusivement à la roue arrière extérieure au virage, et
- un ordre destiné à désactiver le mode d'assistance au virage.

12. Véhicule utilitaire agricole (100, 200, 300) comportant un sélecteur de mode de conduite (27) destiné à basculer entre un mode route et un mode hors route, une pluralité de systèmes de freinage (2a-d ; 39a-d ; 47a-d) associés à une pluralité de roues avant (37a,b) et arrière, une unité de commande électronique (9) qui est reliée de manière conductrice de signaux à la pluralité de systèmes de freinage (2a-d ; 39a-d ; 47a-d) et qui est conçue pour transmettre des ordres de freinage manuels et générés automatiquement aux systèmes de freinage (2a-d ; 39a-d ; 47a-d), un moteur d'entraînement (23) et un système de commande de moteur (21) qui est relié de manière conductrice de signaux au moteur d'entraînement (23) et à l'unité de commande électronique (9) et qui est conçu pour transmettre au moteur d'entraînement (23) des ordres d'entraînement générés automatiquement et manuels, et comportant un système de freinage (1, 10, 50),
**caractérisé en ce que** le système de freinage (1, 10, 50) est réalisé selon l'une des revendications précédentes.

13. Procédé d'assistance dans un véhicule utilitaire agricole (100, 200, 300) selon la revendication 12, comprenant les étapes consistant à :
- détecter si un mode d'assistance au virage est demandé,
- détecter, au moyen d'une unité de commande électronique (9), si le véhicule utilitaire (100, 200, 300) est utilisé en mode route ou hors route,
- détecter si un ordre d'entraînement est transmis à un moteur d'entraînement (23) du véhicule utilitaire (100, 200, 300) lorsqu'un mode d'assistance au virage est demandé,
- activer un mode d'assistance au virage lorsque le véhicule utilitaire (100, 200, 300) est utilisé en mode hors route, lorsque le mode d'assistance au virage est demandé et lorsqu'un ordre d'entraînement est transmis au moteur d'entraînement (23), dans lequel, dans le mode d'assistance au virage, les roues intérieures au virage et, dans le cas où les roues avant du véhicule utilitaire sont entraînées par moteur, la roue avant extérieure au virage (37a,b) du véhicule utilitaire (100, 200, 300) sont freinées.

14. Procédé selon la revendication 13,
dans lequel, dans le mode d'assistance au virage, les roues intérieures au virage et, dans le cas où les roues avant du véhicule utilitaire sont entraînées par moteur, la roue avant extérieure au virage sont freinées de manière à ce que le couple effectif pour l'entraînement soit transmis exclusivement à la roue arrière extérieure au virage.

15. Procédé selon la revendication 13 ou 14, comprenant l'étape consistant à détecter la vitesse du véhicule utilitaire (100, 200, 300),
dans lequel l'étape d'activation du mode d'assistance au virage n'est effectuée que lorsque la vitesse du véhicule utilitaire (100, 200, 300) ne dépasse pas un seuil prédéterminé.

16. Procédé selon l'une des revendications 13 à 15, comprenant l'étape consistant à détecter l'angle de braquage du véhicule utilitaire (100, 200, 300),
dans lequel l'étape d'activation du mode d'assistance au virage n'est effectuée que lorsque l'angle de braquage atteint un seuil prédéterminé.

17. Procédé selon l'une des revendications 13 à 16, comprenant les étapes consistant à :
- détecter une pression de freinage appliquée manuellement et
- désactiver le mode d'assistance au virage lorsque la pression de freinage appliquée atteint un seuil prédéterminé.

18. Procédé selon l'une des revendications 13 à 17, comprenant les étapes consistant à :
- détecter quantitativement l'ordre d'entraînement transmis au moteur d'entraînement (23), et
- désactiver le mode d'assistance au virage lorsque l'ordre d'entraînement atteint un seuil prédéterminé.

19. Procédé selon l'une des revendications 13 à 18, dans lequel l'étape consistant à détecter si un mode d'assistance au virage est demandé comprend l'une, plusieurs ou la totalité des étapes consistant à :
- détecter une position de basculement d'un sélecteur de mode de virage (29),
- affecter les roues avant et arrière (37b,d) à un premier côté (101, 201, 301) du véhicule utilitaire en tant que roues intérieures au virage lorsqu'une première position de basculement du sélecteur de mode de virage (29) est déterminée ou lorsqu'un angle de braquage correspondant est détecté par un ou plusieurs capteurs d'angles de braquage,
- affecter les roues avant et arrière (37a,c) à un second côté (103, 203, 303) du véhicule utilitaire, qui est opposé au premier côté (101, 201, 301), en tant que roues intérieures au virage lorsqu'une seconde position de basculement est détectée ou lorsqu'un angle de braquage correspondant est détecté par un ou plusieurs capteurs d'angle de braquage, et
- désactiver le mode d'assistance au virage lorsqu'une position de basculement neutre est détectée ou lorsqu'un commutateur d'activation d'assistance au virage est désactivé.

20. Procédé selon l'une des revendications 13 à 19, comprenant l'une, plusieurs ou la totalité des étapes consistant à :
- recevoir des données de position en provenance d'un système de navigation par satellite,
- transmettre les données de position au moyen de à une station de commande à distance, et
- recevoir des ordres de commande en fonction des données de position en provenance de la station de commande à distance, lesquels ordres sont sélectionnés dans la liste comprenant :
- un ordre pour faire basculer le sélecteur de mode de conduite (27) dans le mode route ou dans le mode hors route,
- un ordre pour faire basculer le sélecteur de mode de virage (29) sur la position neutre, ou la première ou la seconde position, ou pour actionner un sélecteur d'activation du sélecteur de mode de virage,
- un ordre d'entraînement devant être transmis au moteur d'entraînement (23) au moyen du système de commande de moteur (21),
- un ordre de braquage pour régler un angle de braquage prédéterminé sur les roues directrices, dans lequel le véhicule utilitaire (100, 200, 300) comporte des moyens destinés à régler automatiquement un angle de braquage,
- un ordre destiné à activer le mode d'assistance au virage,
- un ordre de freinage destiné à freiner les roues intérieure au virage et extérieure au virage de manière à ce que le couple effectif pour l'entraînement soit transmis exclusivement à la roue arrière extérieure au virage.
